(19)

Europäisches
Patentamt
European
Patent Office
Office européen
des brevets

(11) **EP 3 009 671 A1**

(12) **EUROPEAN PATENT APPLICATION**

(43) Date of publication:
**20.04.2016 Bulletin 2016/16**

(51) Int Cl.:
*F03D 7/06* (2006.01)       *F03D 3/00* (2006.01)
*F03D 3/04* (2006.01)

(21) Application number: **14189369.3**

(22) Date of filing: **17.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **VanHoonacker, Francis
8500 Kortrijk (BE)**

(72) Inventor: **The designation of the inventor has not
yet been filed**

(74) Representative: **DenK iP
Leuvensesteenweg 203
3190 Boortmeerbeek (BE)**

(54) **Vertical wind turbine**

(57)     A vertical wind turbine (1800) for converting mechanical wind energy into electrical energy, the wind turbine comprising: a rotor of the Darrieus-type, rotatably mounted around a vertical axis (1802) and having a plurality of rotor blades (1801); a wind guidance assembly (1804; 1803; 1805) rotatably mounted with respect to said vertical axis and comprising exactly two upright members (1803a; 1803b) being fixedly mounted to said assembly in such a way that the rotor is positioned at least partly between the two upright members, each upright member having a convex surface segment (1806) facing the rotor; and means for orienting the wind guidance assembly dependent on the direction of the wind.

FIG 18

**Description**

**Field of the invention**

The invention relates to the general field of vertical wind turbines. More in particular, the present invention relates to vertical wind turbines having a Darrieus-type rotor.

**Background of the invention**

Wind turbines of several types are known in the art. The most popular wind turbines nowadays are wind turbines with a horizontal axis, but there are also two types of wind turbines with a vertical axis, generally referred to as "Savonius"-type and "Darrieus"-type, but the working principles of both types are completely different. Briefly summarized, Darrieus-type rotors rotate by virtue of drag and lift forces, while Savonius-type rotors rotate by virtue of capturing wind in a concave surface moving in the wind direction, and diverting wind on a convex surface moving against the wind direction.

Turbines having a rotor of the Darrieus-type are known for almost a century. Originally filed in France in 1925, and extended to the US in 1926, Mr. Darrieus discloses in US1835018A a wind turbine having three or four rotor blades held rigidly in position between two supporting disks or plates. The rotor blades have a shape which is nowadays referred to as an "airfoil". However, the efficiency of such a turbine is not very high.

US5380149A describes two types of vertical wind turbines, one having a rotor of the "Darrieus-type", and another being of the "Savonius type". FIG. 7 of this publication shows a structure consisting of twelve outer blades each having an airfoil shape twice as large as those of the rotor blades, and oriented radially. According to the description typically ten to fifteen blades are used. The alleged purpose of the outer blades is to guide the wind falling upon counter acting rotor blades.

There is still room for improvement or at least alternative wind turbine structures having an improved efficiency.

**Summary of the invention**

It is an object of embodiments of the present invention to provide a good vertical wind turbine with a Darrieus-type rotor.

It is an object of some embodiments of the present invention to provide a vertical wind turbine with a Darrieus-type rotor, with a improved power efficiency.

It is an object of some embodiments of the present invention to provide a vertical wind turbine with a Darrieus-type rotor, that is relatively easy to construct.

It is an object of some embodiments of the present invention to provide a vertical wind turbine with a Darrieus-type rotor, that creates less turbulence, hence less vibrations and less noise.

These objective are accomplished by a device according to embodiments of the present invention.

In a first aspect, the present invention provides a vertical wind turbine for converting mechanical energy of a wind into electrical energy, the wind turbine comprising: a rotor of the Darrieus-type, rotatably mounted around a vertical axis and having a plurality of rotor blades; a wind guidance assembly rotatably mounted with respect to said vertical axis and comprising exactly two upright members, the upright members being fixedly mounted to said assembly in such a way that the rotor is positioned at least partly between the two upright members, each upright member having a convex surface segment facing the rotor; means for orienting or rotating the wind guidance assembly dependent on the direction of the wind.

It is an advantage of embodiments of the present invention that the vertical wind turbine has a wind guidance assembly as described, because such upright members will bend the streamlines of the wind in a manner that will increase the torque exerted on the rotor, which results in a higher efficiency of the wind turbine.

It is an advantage of embodiments of the present invention that the wind guidance assembly has only two upright members, because such an assembly is easier to make as compared to for example an assembly having ten or twelve or fifteen blades.

It is an advantage of embodiments of the present invention that the wind guidance assembly can be optimally oriented for any wind direction.

It is an advantage of embodiments of the present invention that substantially no turbulences are created by the upright members within a cylindrical space defined by the rotor blades.

It is an advantage of particular embodiments of the present invention that the concave surface segment of each of the upright members has a substantially constant curvature over at least half of its outer area, because such structures are easy to produce.

The rotor blades are preferably rectilinear blades with an airfoil cross section, fixedly mounted to the rotor (thus not rotatable about their own axis), because this is easier to make and less prone to defects.

In embodiments according to the present invention, the number of rotor blades is three or four.

It is an advantage of providing only three or only four rotor blades, because a larger number of rotor blades would disturb the movement of the wind.

In embodiments according to the present invention, each of the upright members is a hollow three-dimensional body.

Preferably the "backside" of the upright members, i.e. the side which is facing away from the rotor, is closed by a flat or convex surface, because otherwise the wind may cause turbulences inside the concave space, which may cause vibrations (thus wear) and acoustical noise, but that is not absolutely necessary, and the backside may also be left open. The "bottom" and "top " are preferably also closed, but that is not absolutely necessary.

It is an advantage of embodiments of the present invention that the upright members are hollow bodies, because it will decrease the weight of the members, hence facilitate orienting of the wind guidance assembly, and facilitate easy mounting of the wind turbine, even heights of about 5 to 10 meters.

Rigid hollow bodies can readily be made for example by using a metal framework on the inside, and a metal plate on the outside. A preferred material is aluminum, but other materials may also be used.

In embodiments according to the present invention, both upright members have an identical shape.

It is an advantage of using identical shapes in that the simulations, the design, the production, the assembly, and the inventory is easier to manage, as compared to the case where for example two symmetrical yet different shapes are used.

In embodiments according to the present invention, each of the upright members is a cylindrical shape.

It is an advantage of using cylinders as the upright members because cylinders, e.g. metal cylinders, or plastic cylinders, or composite cylinders are readily available, and easy to mount. In this case, the cylinders are preferably mounted such that the axes of the two upright cylinders and the axis of the rotor are located in a same plane.

It is an advantage that the efficiency improvement of a wind guidance assembly having two cylinders with a diameter of about D/4, whereby D is the diameter of the virtual cylinder defined by the rotor blades, is simulated to be about 23%.

In alternative embodiments of the present invention, each of the upright members have a planar surface segment facing away from the rotor.

It is an advantage of embodiments of the present invention to use a planar surface segment for closing a three-dimensional hollow body, rather than leaving the upright members open, because closing reduces turbulences, thus noise and vibrations and wear.

It is an advantage of using a planar surface element rather than a shaped element (e.g. rolled or bended or the like), because it is easier to produce, and doesn't negatively influence the efficiency of the rotor.

It is an advantage of embodiments of the present invention that the planar surfaces of both upright members are mounted substantially parallel.

It is an advantage of embodiments of the present invention that during normal use, the planar surfaces of both upright members can be oriented substantially parallel to the direction of the wind.

In embodiments of the present invention, a cross-section of the upright members in a horizontal plane is a closed circular segment, having a chord and an arc, the arc having a radius "R" in the range of 25% to 150% of the diameter "D" of the cylindrical space defined by the rotor blades.

It is an advantage of such upright members that they can be easily manufactured using a first plate having a constant radius, which can e.g. be produced by rolling, and a second plate which is flat, and that complex shapes and moulds and machinery can be avoided.

One particularly advantageous embodiments is one where the shape is in fact half of a cylinder, but the "backside" of which is closed by a flat plate, and whereby the diameter of the half cylinder is about 40% to about 60% of the diameter defined by the rotor blades, for example about 50%. According to simulations, such an embodiment provides an efficiency improvement of about 56%, despite the simple structure.

Other particularly interesting embodiments may have for example a chord length L in the range of about 70% to 140%, for example about 70% to 90% or about 110% to 140% of the diameter defined by the rotor blades, and a height H (also known as "sagitta") equal to 15% to 25% of the chord length L, for example about 20%. According to simulations, such embodiments may provide an efficiency improvement of about 29% to about 64% respectively.

In embodiments according to the present invention, a cross-section of the upright members in a horizontal plane is a closed shape composed of a first linear segment, and a first arc segment having a first radius R1 and a second arc segment having a second radius R2.

Although slightly more complicated to make than the previous embodiments, it is an advantage that such a shape may provide a further 3% increase in efficiency as compared to a closed circular segment having the same length of the linear segment.

In embodiments according to the present invention, the means for orienting the wind guidance assembly comprises a sensor for measuring the direction of the wind, and a controller connected to the sensor for reading the measured direction, and a motor connected to said controller for rotating the wind guidance assembly for allowing passage of the wind between the two upright members.

In the cases where the upright members are cylindrical, or partly cylindrical, the controller is preferably adapted for orienting the wind guidance assembly such that the plane formed by the two axis of the upright members is substantially perpendicular to the direction of the wind.

In embodiments according to the present invention, the vertical wind turbine further comprises a second sensor for measuring a speed of the wind, and the controller is further adapted for orienting the wind guidance assembly for restricting passage of the wind between the two upright members when the measured speed is above a predefined threshold.

It is an advantage of such a system that the rotor can be protected from turning too fast when the wind speed is too high, by orienting the wind guidance assembly in front of the rotor, so that the wind would blow primarily against one of the upright members, without creating the advantageous streamlines described above. Even in an embodiment where the upright members are half-cylinders with a diameter of only half the diameter of the rotor, the power provided to the rotor can be reduced by 93%, thereby effectively protecting the rotor against damage.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

**FIG. 1** shows an example of a vertical wind turbine with a Darrieus-type rotor, known in the art.

**FIG. 2** explains the working-principle of a Darrieus-type rotor, and shows examples of drag and lift forces, and illustrates the concept of "angle of attack".

**FIG. 3** shows an example of the angle of attack $\alpha$ as a function of the azimuth position $\beta$ of FIG. 2.

**FIG. 4** shows an example of the torque related to the drag force and the lift force and the total force experienced by the rotor blades of FIG. 2, in function of the azimuth position.

**FIG. 5 to FIG. 7** illustrate an underlying idea of the present invention.

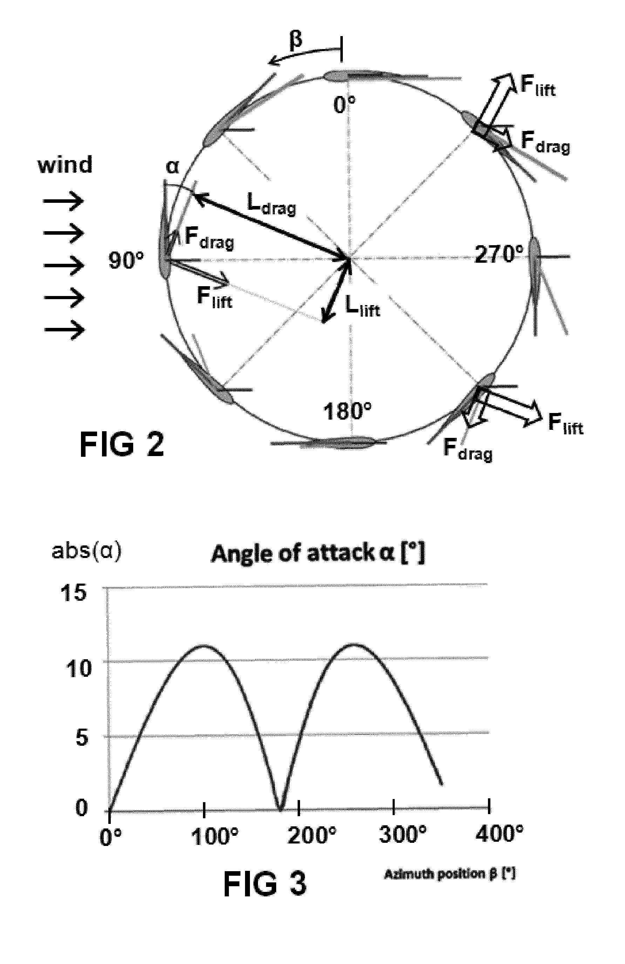

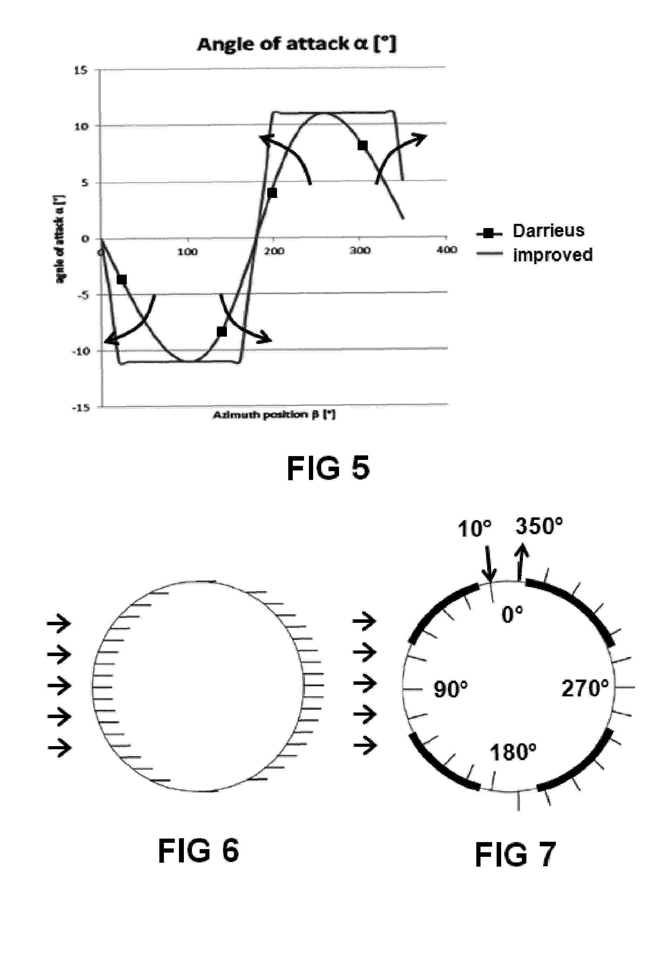

FIG. 5 shows the angle of attack of the Darrieus rotor, and of an envisioned improved rotor. FIG. 6 illustrates the velocity vector of the wind crossing the virtual circle described by the rotor blades in FIG. 2. FIG. 7 illustrates envisioned velocity vectors of an envisioned improved structure.

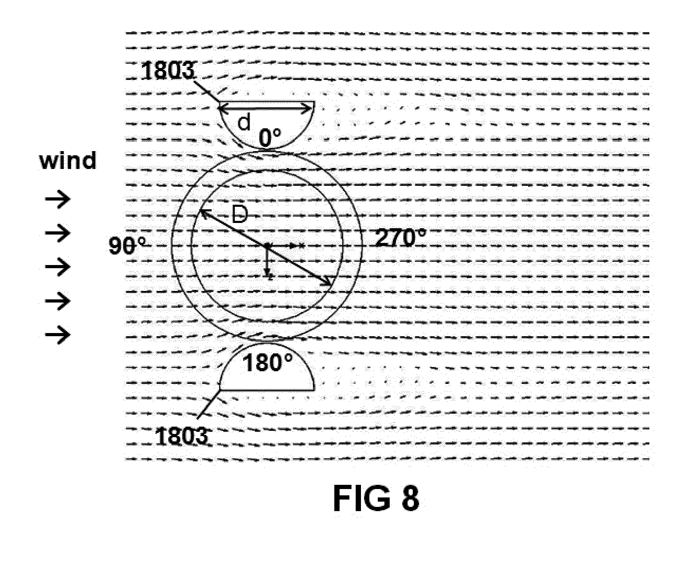

**FIG. 8** schematically shows (in cross sectional view) an embodiment of the present invention, having a wind guidance assembly with two upright hollow bodies having a cross sectional shape in the form of a closed circular segment, in particular half circles, arranged at opposite sides of the rotor, along with a simulated vector-field of the wind. The rotor blades are not shown. The outer circle represents possible positions of the rotatable wind guidance assembly, the inner circle represents the virtual circle described by the rotor blades.

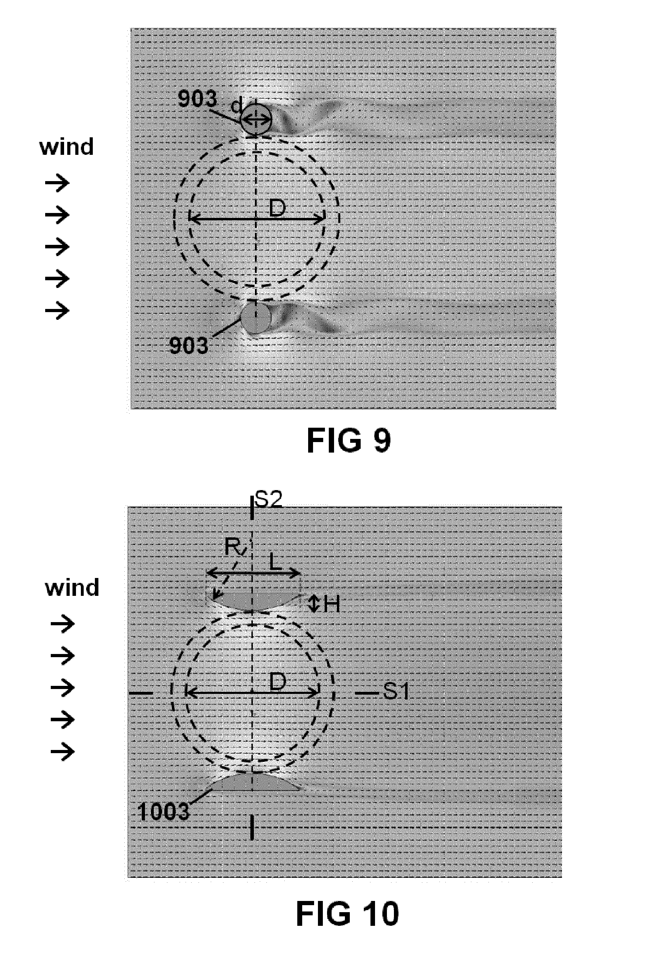

**FIG. 9** schematically shows (in cross sectional view) another embodiment of the present invention, having a wind guidance assembly with two cylindrical upright hollow shapes, arranged at opposite sides of the rotor, along with a simulated vector-field of the streamlines of the wind.

**FIG. 10** shows a variant of the embodiment of FIG. 8, where the two upright hollow members have a cross sectional shape in the form of a closed circular segment, arranged at opposite sides of the rotor, along with a simulated vector-field of the wind.

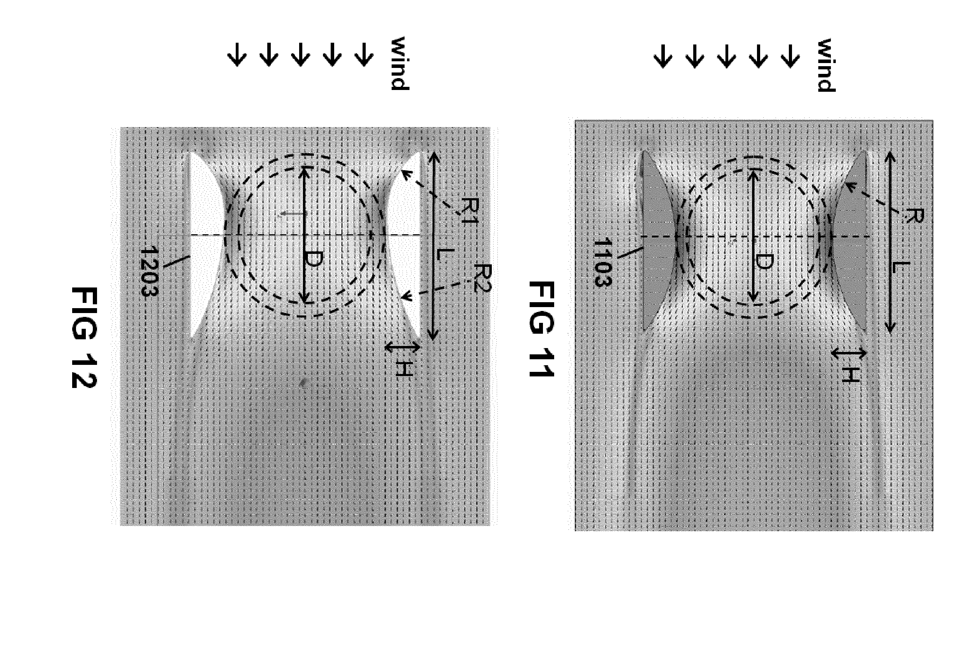

**FIG. 11** shows a variant of the embodiment of FIG. 10, with a similar but larger cross sectional shape.

**FIG. 12** shows a variant of the embodiment of FIG. 11, where the cross section of the upright hollow members is a closed shape composed of a first linear segment, and a first arc segment having a first radius and a second arc segment having a second radius. It can be seen as the circular segment of FIG. 11 being compressed at the leading edge, and being elongated at the trailing edge.

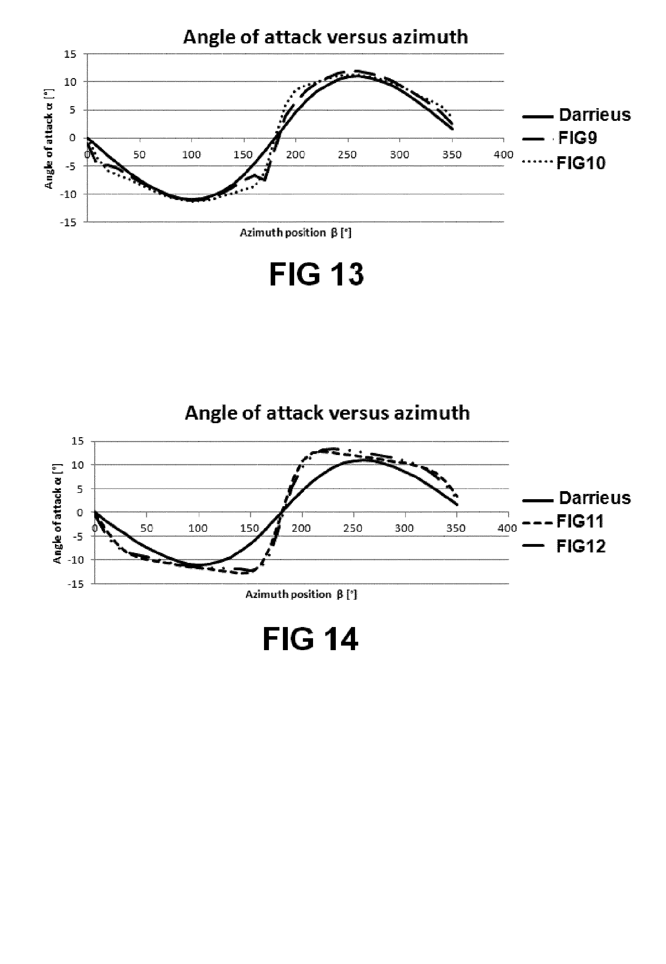

**FIG. 13** shows the angle of attack $\alpha$ as a function of the azimuth angle $\beta$ for the embodiments shown in FIG. 9 and FIG. 10, resulting from a simulation.

**FIG. 14** shows the angle of attack $\alpha$ as a function of the azimuth angle $\beta$ for the embodiments shown in FIG. 11 and FIG. 12, resulting from a simulation.

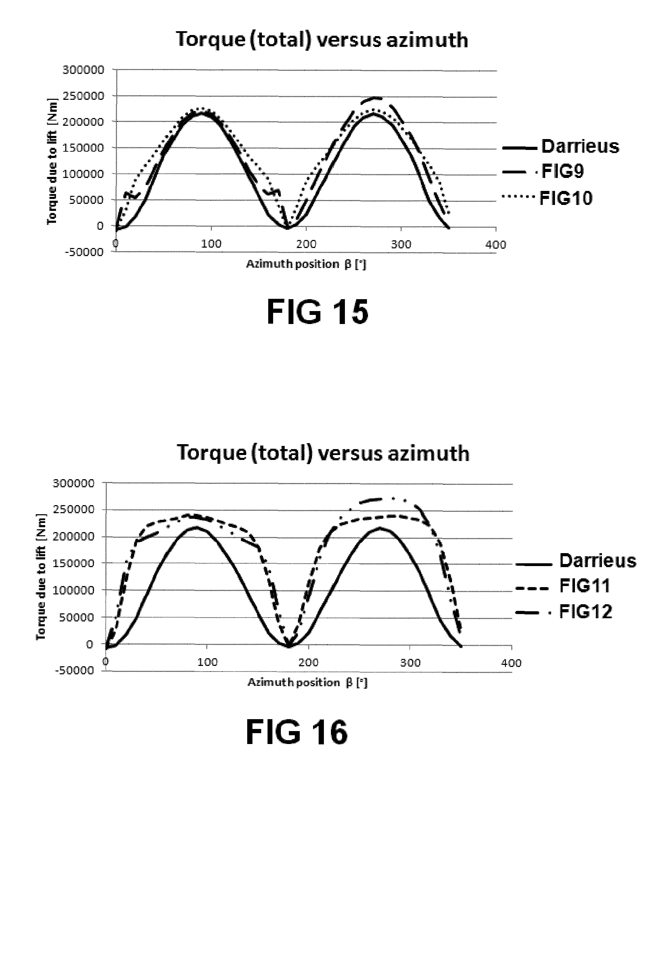

**FIG. 15** shows the total torque as a function of the azimuth angle $\beta$ for the embodiments shown in FIG. 9 and FIG. 10, resulting from a simulation.

**FIG. 16** shows the total torque as a function of the azimuth angle $\beta$ for the embodiments shown in FIG. 11 and FIG. 12, resulting from a simulation.

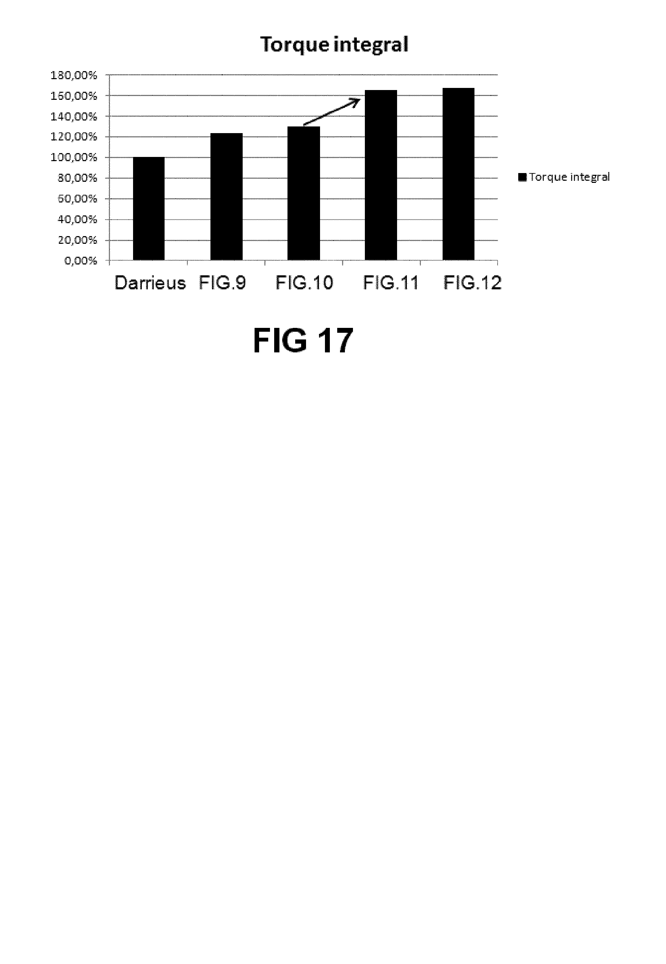

**FIG. 17** shows the integrated torque over a complete revolution of the rotor blade, corresponding to the total torque of FIG. 15 and FIG. 16.

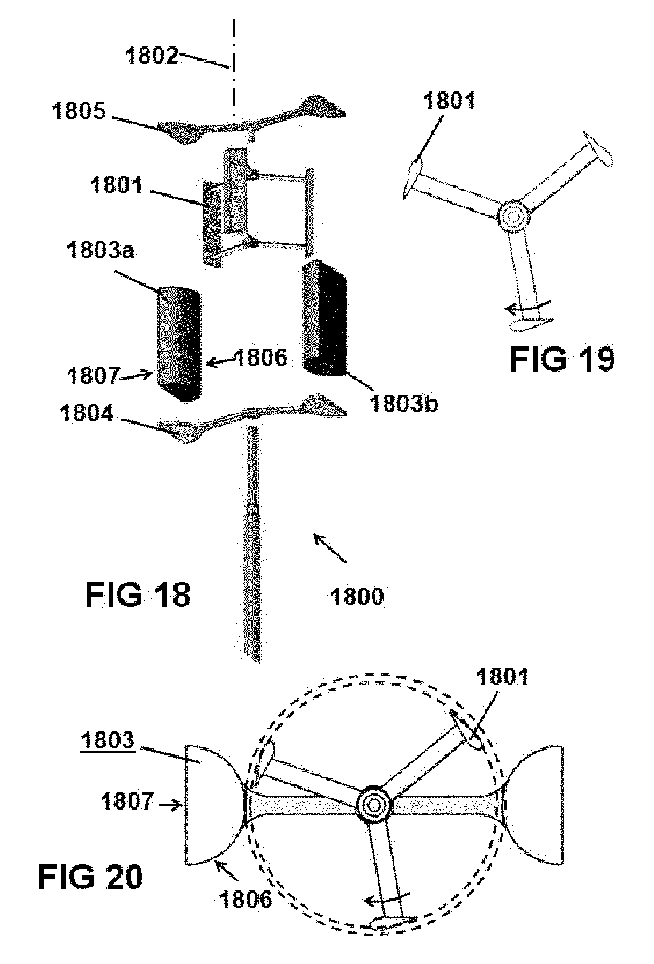

**FIG. 18** shows an exploded view of a vertical wind turbine according to an embodiment of the present invention, having two half-cylindrical bodies, each with a convex side facing the rotor and a back side being closed by a planar segment, as upright members of a wind guidance assembly which is rotatable around the vertical axis.

**FIG. 19** shows the rotor of FIG. 18 in top-view.

**FIG. 20** shows the rotor, the virtual circle described by the rotor blades, and the two upright members, in cross section.

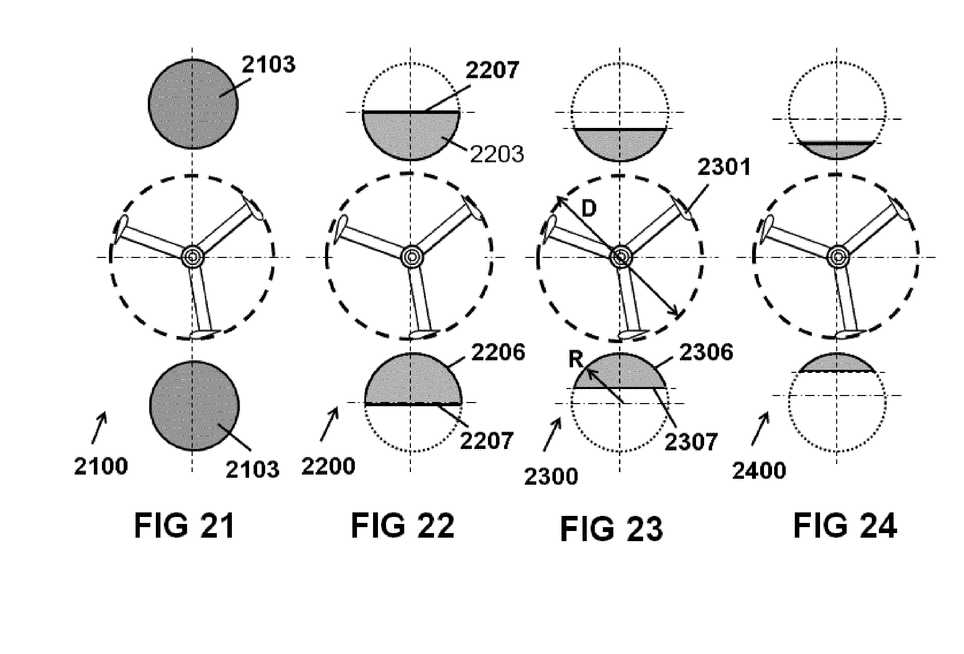

**FIG. 21 to FIG. 24** show various embodiments of the present invention in cross section. In **FIG. 21** the two upright members are hollow cylinders. In **FIG. 22** the two upright members are half cylinders but closed at their back with a planar surface. In **FIG. 23** and **FIG. 24** the two upright members have a horizontal cross section in the form of a closed circular segment consisting of an arc segment and a linear segment.

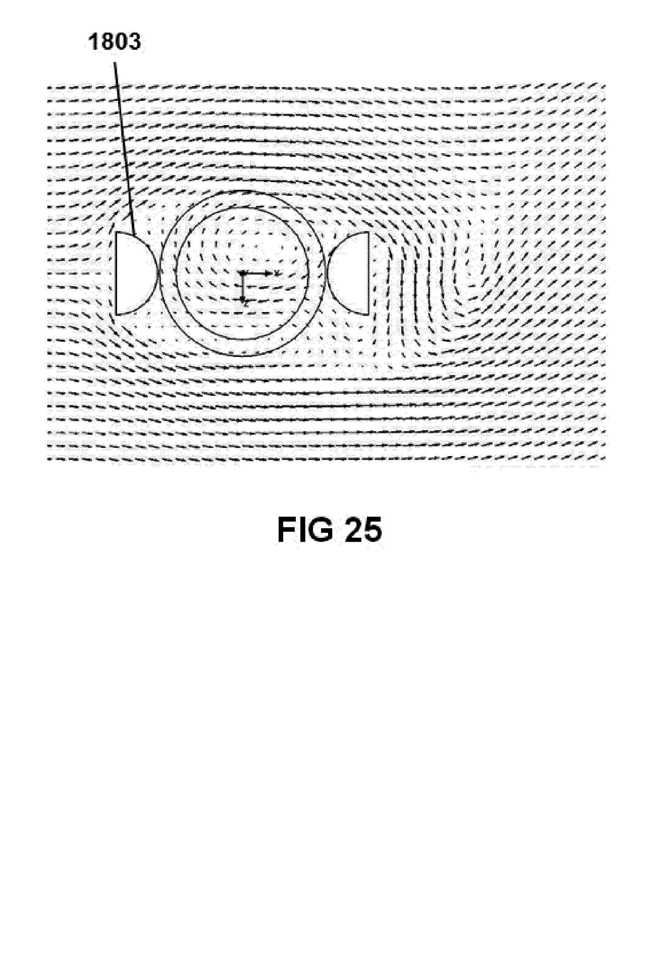

**FIG. 25** illustrates an optional feature of the present invention, whereby the wind guidance assembly is rotated in front of the rotor for protecting the turbine in case the wind velocity is too high (higher than a predefined threshold).

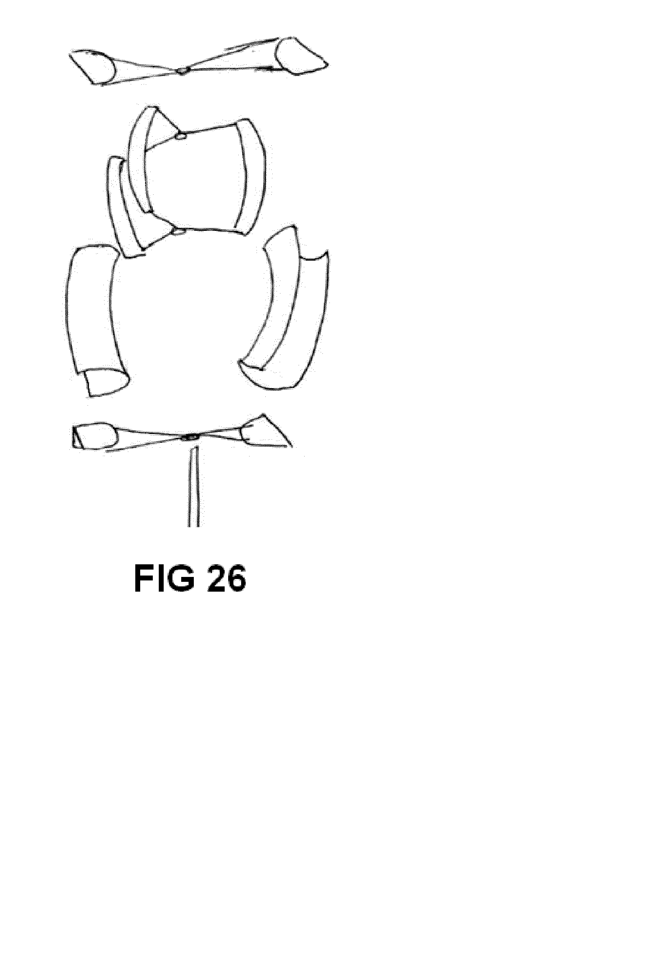

**FIG. 26** shows a variant of the embodiment shown in FIG. 18, wherein the upright members and the rotor blades are not straight.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Unless explicitly stated otherwise, the simulations referred to herein are performed assuming a constant wind velocity of 5 m/s.

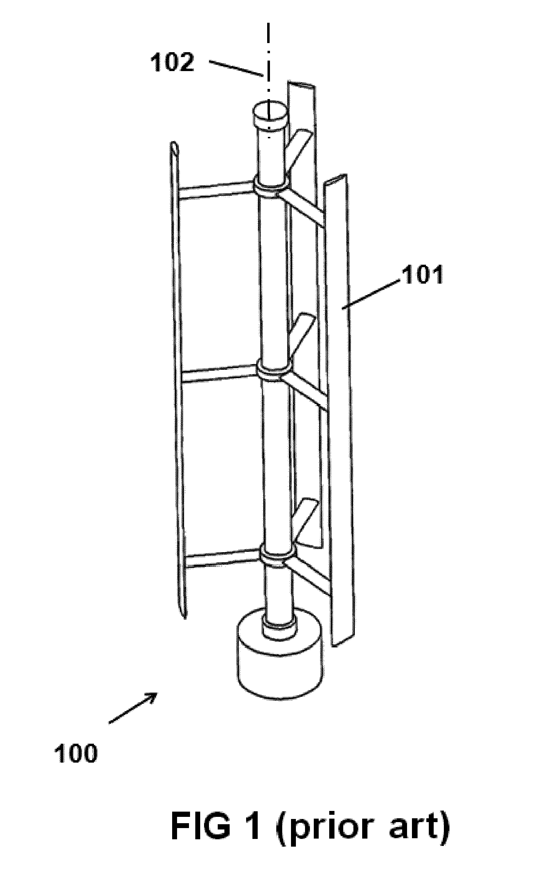

FIG. 1 shows an example of a vertical wind turbine 100 with a Darrieus-type rotor, known in the art. The rotor has three rotor blades 101. Each rotor blade is an elongated vertical profile having an airfoil in horizontal cross section. Many different airfoil profiles are known in the art, and are suitable for use in a wind turbine. A popular series is the NACA series, but other shapes may also be used. One of the main disadvantages of the wind turbine shown in FIG. 1 is that its power efficiency is not very high, which partly explains why these wind turbines are not very popular.

There is a common misperception however that the reason for this low efficiency is mainly because the rotor blades have to move in a direction opposite the direction of the wind. While this is largely true for a Savonius rotor, this is incorrect for a Darrieus rotor, as will be explained next.

FIG. 2 will be used to explain the basic working-principles of a Darrieus-type rotor. A rotor blade having an airfoil shape is shown at eight positions on a virtual circle. In each of these positions, two air velocity vectors are shown, one (shown horizontally) representing the absolute wind speed, a second (shown tangential to the circle) representing the relative speed of the rotor blade when moving on the circle at a given angular speed (in absence of wind), the sum vector representing the relative speed of the air with respect to the rotor blade when turning at a given angular speed in the presence of wind.

The forces exerted by the air on the airfoil can be decomposed in two parts: a so called "drag force", oriented in the direction of the velocity sum vector, and a so called "lift force" oriented perpendicular to the drag force. Such forces are well known from the field of airplanes, and need not be explained in detail here. The drag force "Fdrag" shown in the position at 90° multiplied by the distance "Ldrag" represents a first torque trying to slow down the rotor. The lift force "Flift" multiplied by the distance "Llift" represents a second torque trying to accelerate the rotor. The combined torque is the difference between the second torque (due to the lift force) and the first torque (due to the drag force), which is the useful torque providing mechanical energy that will be converted into electrical energy, using a generator. As the electrical part of wind turbines is well known in the art, no further explanation is deemed necessary.

An important factor in determining the distance "Llift" is the so called "angle of attack $\alpha$", between the sum vector of velocity and a momentary displacement of the rotor blade (tangential to the circle). For a given radius R, the moment of force

$$Mdrag = Fdrag \times Ldrag = Fdrag \times R \times \cos(\alpha) \qquad (1)$$

$$Mlift = Flift \times Llift = Flift \times R \times \sin(\alpha) \qquad (2)$$

The inventors noted that, when the angle of attack is 0°, there is no advantageous moment of force related to the lift force. They also noted that, in contrast to what is generally assumed, the lift force causes a torque component in a favorable direction for all positions on the virtual circle, even when the airfoil is moving "against the wind", as illustrated for example for $\beta$ = 225° and for $\beta$ = 315°. From these drawings it is also clear that the moment of force related to these lift forces would be even greater if the angle of attack would be larger, which is in fact an underlying principle of the present invention.

FIG. 3 shows an example of the angle of attack "$\alpha$" (in absolute value) as a function of the azimuth position "$\beta$" for the rotor shown in FIG. 2. It is noted that the angle of attack $\alpha$ is zero at the azimuth positions $\beta$=0° and $\beta$=180°, because at these positions the rotor blade moves parallel to the wind direction.

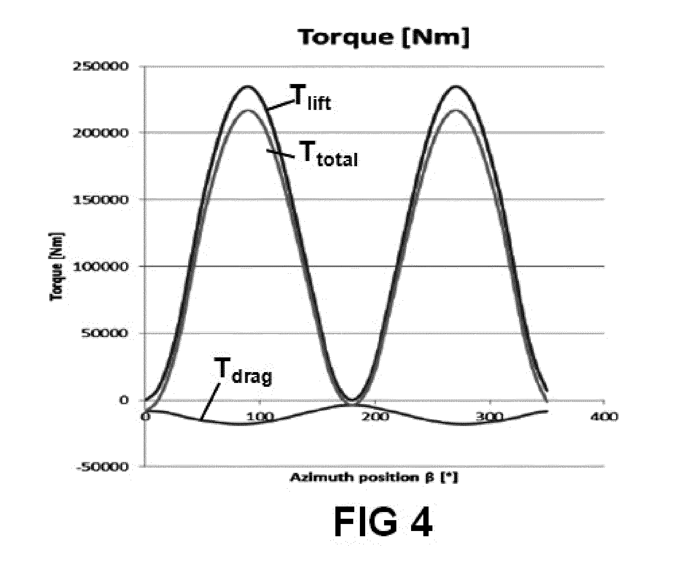

FIG. 4 shows an example of the torque related to the drag force and the lift force, and the combined torque exerted upon each rotor blade, as it moves along the virtual circle, assuming the wind speed is 5.0 m/s, and the angular velocity of the rotor blades is 10.47 rad/s, and the diameter of the circle described by the rotor blades is 5.0 m. But of course, the present invention is not limited to wind turbines having a diameter of only 5.0 meter, and other values may also be used, for example any diameter in the range of 1.0 m to 10.0 m.

Comparing FIG. 4 with FIG. 3, the inventors realized that the torque amplitude is strongly related to the angle of attack $\alpha$, and wondered that if the angle of attack $\alpha$ could be increased, then also the total torque would increase, as illustrated in FIG. 5.

In order to change the angle of attack as indicated in FIG. 5, the velocity vector of the wind when crossing the imaginary circle would have to be modified from the situation in FIG. 6 to the situation indicated in FIG. 7.

Further considering FIG. 7, the inventors further realized that the angle of attack (and torque) is already quite satisfactory around 90° (e.g. in the range of about 60° to about 120°) and around 270° (e.g. in the range of about 240° to about 300°), so it might not be required to change the direction of the wind at these locations. They further realized that if the wind would effectively have to enter the imaginary circle at about 10° as indicated, and would have to leave the circle again at about 350° as indicated, the wind would almost have "to stop and turn around", which is impossible without causing a lot of turbulences, which is highly undesirable.

Trying to find a solution for bending the streamlines shown in FIG. 6 to the streamlines shown in FIG. 7, they came up with the idea of providing a wind guidance assembly having two (and only two) upright elements (also referred to herein as "upright members") located near the azimuth angles of 0° and 180°, and being of a simple construction. In the example shown in FIG. 18, the two three-dimensional closed shapes have the form of two half-cylinders, which are to be positioned near azimuth angles 0° and 180°. The two upright elements 1803 of FIG. 18 may be mounted on a lower holder 1804 and an upper holder 1805, which are rotatable around the vertical axis 1802, but other holders, such as e.g. a circular disk or the like, could also be used. It is an advantage the upright members are fixedly mounted to the wind guidance assembly, so that by simply rotating the holders 1804, 1805 the position of the upright members 1803 can be oriented dependent on the direction of the wind.

The wind turbine 1800 further comprises a rotor of the Darrieus type having a number of vertical rotor blades 1801, three in the example shown, but four would also be possible. The rotor blades 1801 having a cross section in a horizontal plane in the shape of an aerodynamic airfoil for creating drag and lift forces as explained in relation to FIG. 2. The rotor and the wind guidance assembly are coaxially mounted around the same vertical axis 1802, but normally they do not rotate at the same speed. In fact, the wind guidance assembly is relatively stationary, and only rotates as the direction of the wind moves. Other details such as bearings etc. are conventional, and are omitted from the drawings.

FIG. 8 shows the effect of adding two upright members 1803 in the form of two half cylinders with a diameter d, which in this case is equal to D/2, D being the diameter of the imaginary circle defined by the rotor blades. What is shown is a simulation of the wind vector streamlines when entering the picture (on the left) at a constant speed of 5 m/s. As can be seen from FIG. 8, the streamlines are not disturbed at azimuth β=90° and β=270° because there are no obstructions before or behind the rotor at these locations, but the streamlines in a large vicinity around β=0° and around β=180° are bended radially. This will cause an increase of the torque, which will improve the efficiency of the turbine. It came as a surprise that, based on simulations, the power efficiency of a wind turbine with two such closed half cylinders with d=D/2, is increased by 56% as compared to a Darrieus rotor without such a wind guidance assembly. This was not expected, especially for such a relatively simple construction, and moreover as there are only two upright members positioned around the rotor, not ten of fifteen.

A disadvantage of this wind guidance assembly however is that some turbulence is generated on the outer sides of the half-cylinders, and also behind the trailing edge of the half cylinders (on the right of the members in FIG. 8), which may create some acoustical noise. These turbulences do not, however, seem to negatively influence the efficiency of the turbine, since the air flow is not turbulent on or within the imaginary circle.

Of course the diameter d may be smaller or larger than 50% of D, for example in the range of 25% to 100% of D, for example about 60% of D, or about 70% of D, or about 80% of D, or about 90% of D.

FIG. 9 shows the wind vector lines for another wind guidance assembly having two cylindrical upright elements 903 (shown in cross section), with a diameter "d" of about 25% of the diameter "D" of the imaginary circle of the rotor. According to simulations, the efficiency improvement is 23%, despite the very basic structure of merely two cylinders. However, there is a lot more turbulence as compared to the half cylinders shown in FIG. 8, but again, fortunately the turbulence zone is located outside of the imaginary circle of the rotor blades, hence, although being undesirable from acoustical viewpoint, it has no impact on the power efficiency. It came as quite a surprise to the inventors that the efficiency of the Darrieus wind turbine can be improved by 23% by simply placing two small cylinders on either side, albeit that they have to be repositioned when the direction of the wind changes.

FIG. 10 schematically shows (in cross-sectional view) another embodiment of the present invention having a wind guidance assembly with two upright hollow shapes having a horizontal cross-section in the form of a circular segment, arranged at opposite sides of the rotor, along with a simulated vector-field of the wind. The circular segment consists of an arc segment and a linear segment. The arc segment is convex, and is facing the rotor. The linear segment is facing away from the rotor. It is noted that wind guidance assembly of FIG. 10 has two symmetry planes, denoted by "S1" and "S2", both passing through the central vertical axis. The same symmetry planes are also present for other embodiments, but not shown.

Looking at the streamlines of the wind, and the colors (brighter means higher speed and less pressure; darker means higher pressure and lower speed) there is a clear contraction of the wind when entering the zone between the two upright elements, and a clear expansion when leaving said zone, which improves the "angle of attack" as described above. According to the simulation results, the efficiency improvement by adding this structure to the Darrieus rotor is 29%, which is better than the two cylinders. Moreover, these elements create much less turbulence than the structures of FIG. 8 and FIG. 9. Furthermore, these structures are still very easy to produce, using classical equipment, and not requiring complicated tooling or moulds. They may for example be produced using rolling metal profiles and metal plates.

In the example shown in FIG. 10, the chord length L of the cross section of the upright elements 1003 is about 70% of the diameter D of the virtual circle defined by the rotor blades, but other dimensions can also be used. For example L can be in the range of 50% to about 150% of D, for example about 50% to about 90% of D, or about 110% to about 140% of D. For each of these embodiments, the height H, also known as "sagitta", may be for example 15% to 49% of the chord length L, preferably 15% to 30%, for example about 20% or about 25%. Such shapes are easy to produce, and they improve the power efficiency of the Darrieus rotor significantly, without causing a considerable amount of turbulence or noise, which is a major advantage of these embodiments.

FIG. 11 shows a variant of the embodiment of FIG. 10, having substantially the same cross sectional shape, but a larger size. In the example shown, the ratio of the length L over the diameter D is about 140%, and the ratio of H over L is about 20%. As can be seen by the brightness, due to the larger size of the upright members of the wind guidance assembly, a larger area of the rotor space is influenced, and the wind is compacted more when entering the virtual circle defined by the rotor blades, and is expanded more when leaving said circle. According to the simulations, the efficiency improvement by adding this structure to the Darrieus rotor is 64% for a wind speed of 5.0 m/s. The rotor-diameter was assumed to be 5.0 m. Larger structures have not been simulated, because such structures would become very bulky, especially when taking into account that they are typically mounted 5 to 10 meters or higher above the ground.

FIG. 12 shows a variant of the embodiment of FIG. 11, having substantially the same dimensions, but a more complicated shape. The leading edge of the shape was compressed, and the trailing edge of the shape was expanded. In the example shown, the cross section of these upright hollow members 1203 is a closed shape composed of a first linear segment, and a first arc segment having a first radius R1 and a second arc segment having a second radius R2. In practice, such as shape may be produced as a combination of a first metal plate having a first radius R1, and a second metal plate having a second radius R2 larger than R1, and a flat metal plate at the "back". According to the simulations, the efficiency improvement offered by this structure is 67%, which is only marginally higher than that of FIG. 11, while being more complicated to produce. This example shows that even though the structure of FIG. 11 is relatively simple (a mere circular segment), yet is close to optimal in view of performance improvement, and it may not be worth the effort to produce these more complicated structures.

Referring to all the embodiments shown in FIG. 8 to FIG. 12, it is pointed out that in contrast to the solution proposed in US5380149A, the wind is not substantially stopped at the azimuth positions 0° and 180°, by an outer blade blocking passage, but that the wind is in fact accelerated near these positions in embodiments of the present invention. Besides the fact that there are only two upright members, and the fact that the wind guidance assembly is rotatable, this is another major difference with the prior art.

FIG. 13 shows the angle of attack α as a function of the azimuth angle β, for the embodiments shown in FIG. 9 (two cylinders with d=D/4) and FIG. 10 (two closed circular segments with L/D=70%), based the on simulation results. It can be seen that the main improvement is near the region of 0° and 180° (in the vicinity of the upright members), while the angle (and thus the torque) remain largely unchanged near 90° and 270°. There is a slight increase near 270°, probably due to acceleration due to compression and expansion. These curves clearly offer an improvement as compared to the "pure" Darrieus-rotor, but are still far from the trapezoidal shape envisioned in FIG. 5.

FIG. 14 shows the angle of attack α as a function of the azimuth angle β, for the embodiments shown in FIG. 11 (two closed circular segments with L/D=140%) and FIG. 12 (same, but slightly compressed at the leading edge and slightly elongated at the trailing edge), based on simulation results. These two curves have very similar performance, as was to be expected given the efficiency improvement numbers of 64% and 67% respectively. It can be seen by comparing the curves with the reference curve (Darrieus), that the angle of attack is substantially improved at all angular positions, except in a very small zone near 0° and 180°, where it remains zero.

FIG. 15 shows the total torque as a function of the azimuth angle β for the embodiments shown in FIG. 9 (cylinders) and FIG. 10 (closed circular segments with L/D=70%), which confirms that an improvement of the "angle of attack" indeed also improves the total torque.

FIG. 16 shows the total torque as a function of the azimuth angle β for the embodiments shown in FIG. 11 (closed circular segments with L/D=140%) and FIG. 12 (same with compressed leading edge and elongated trailing edge). It is interesting to see that the former curve is substantially the same in the zone 0° to 180° on the one hand and 180° to 360° on the other hand, which may be explained by the symmetry of the structure and of the streamlines of the wind, but that the two partial curves are quite different for the latter curve, where apparently a small decrease of torque in the range of 0° to 180° is compensated by a small increase of torque in the range 180° to 360°, but the total result is substantially the same for both, as explained above.

FIG. 17 shows the integrated torque over a complete revolution for the examples described above, and is also indicative for the power efficiency improvement of the wind turbine according to the present invention. But of course, the present invention is not limited to these specific examples, and other variants can easily be designed, e.g. by merely choosing different dimensions for d, L or H. As one example, it is to be expected that the power improvement of a wind guidance assembly having two closed circular segments (having a shape similar to those shown in FIG. 10 and FIG. 11), but with L/D=100% and H/L=20%, will be about 43%.

Coming back to the structural features, **FIG. 18** shows an exploded view of an embodiment of a vertical wind turbine 1800 with a wind guidance assembly according to the present invention, which is rotatable in dependence of the direction of the wind. Thereto, the wind guidance assembly may have a passive means (such as an upright wing on top of the wind guidance assembly), or an active system comprising a sensor for measuring the wind direction, and a controller, and a motor, none of which are shown, but are well known in the art, and hence need not be further explained here. In particular embodiments, the wind guidance system may be self-orienting without a motor and without a wing on top. This may be achieved for example by embodiments like the one shown in FIG. 12. Preferably in this case the length of the arc with radius R2 is much longer than the length of the arc with radius R1, e.g. at least 3.0 times as long, e.g. at least 4.0 times as long.

Such a control system (active or passive) would orient the wind guidance assembly such that the two upright members 1803 are positioned on the left and on the right of the rotor, as seen by the wind, or stated in other words, that the symmetry plane passing between said upright members is parallel to the direction of the wind. The height of the rotor (corresponding to the length of the rotor blades) shown in FIG. 18 is in the same order of magnitude as the diameter of the rotor, but may also be smaller or larger. Typically the ratio of the height over the diameter may be any value in the range of 50% to 500%, preferably in the range of 50% to 250%, for example about 100% or about 150%.

A Darrieus-rotor with three rotor blades 1801 is shown in top view in **FIG. 19,** but in alternative embodiments, the rotor may have only two rotor blades, or four rotor blades.

The rotor blades 1801 shown in FIG. 18 are straight over their entire length in the upright direction, but that is not absolutely required, and the blades may also have a curved portion, e.g. at their bottom side or at their top side, or they may be entirely curved. An example of such an embodiment is shown in **FIG. 26.**

The two upright members of the wind guidance assembly are two hollow three-dimensional bodies. In the example of FIG. 18, these have the shape of a half cylinder, but other shapes may also be used, as discussed in relation to FIG 8 to FIG. 12.

It should be added however that it is not absolutely required that the upright members 1803, 1003, 1103, 1203 are closed three-dimensional bodies, because the invention would also work if the "back" side of these upright members (i.e. the side facing away from the rotor) is at least partly left open. Such upright member could for example consist of a rolled metal plate.

**FIG. 20** shows in top view that the rotor blades 1801 define a virtual cylinder with a circular cross section, which virtual cylinder is located between the two upright members 1803 of the wind guidance assembly, at a relatively short distance therefrom, which can easily be determined by the skilled person, by trial and error.

Instead of the half cylinders shown in FIG. 18 and FIG. 22, upright members with another cross-section may also be used, for example cylinders shown in FIG. 21, or other circular segments defined by an arc segment and a chord segment, as shown in FIG. 23 or FIG. 24.

Although a particular diameter d of about D/2 was chosen for the examples of FIG. 21 to 24, in variants of these embodiments, the diameter "d" of the outer cylinders or cylindrical segments may be increased or decreased relative to the diameter "D" of the rotor, as was already discussed before.

**FIG. 25** illustrates an additional optional feature of the present invention, whereby the wind turbine further comprises a second sensor for measuring the wind speed, and whereby the controller is further adapted for rotating the wind guidance assembly in front of the rotor in case the measured wind velocity is above a predefined threshold, for protecting the rotor and electrical circuitry etc. connected thereto. FIG. 25 shows simulated stream lines of the wind in such a case, for a wind speed of 5 m/s, although the threshold value may typically be e.g. at least 18 m/s, e.g. about 20 m/s or about 25 m/s. As can be seen from the simulation, a lot of turbulence is created in such a case, but the power of the rotor is effectively reduced by 93%.

## Claims

1. A vertical wind turbine (1800; 2100; 2200; 2300; 2400) for converting mechanical energy of a wind into electrical energy, the wind turbine comprising:

   - a rotor of the Darrieus-type, rotatably mounted around a vertical axis (1802) and having a plurality of rotor blades (1801);
   - a wind guidance assembly (1804; 1803a; 1803b; 1805) rotatably mounted with respect to said vertical axis (1802) and comprising exactly two upright members (1803a; 1803b), the upright members (1803a; 1803b) being fixedly mounted to said assembly in such a way that the rotor is positioned at least partly between the two upright members, each upright member (1803a; 1803b) having a convex surface segment (1806) facing the rotor;
- means for orienting the wind guidance assembly (1802) dependent on the direction of the wind.

2. The vertical wind turbine (1800; 2100; 2200; 2300; 2400) according to claim 1, wherein the number of rotor blades (1801) is three or four.

3. The vertical wind turbine (1800; 2100; 2200; 2300; 2400) according to any of the previous claims, wherein each of the upright members is a hollow three-dimensional body.

4. The vertical wind turbine (1800; 2100; 2200; 2300; 2400) according to any of the previous claims, wherein both upright members (1803) have an identical shape.

5. The vertical wind turbine (2100) according to any of the previous claims, wherein each of the upright members (1803) is a cylindrical shape.

6. The vertical wind turbine (2200; 2300; 2400) according to any of the claims 1 to 4, wherein each of the upright members (2203) have a planar surface segment (2207) facing away from the rotor.

7. The vertical wind turbine (2300) according to claim 6, wherein a cross-section of the upright members in a horizontal plane is a closed or an open circular segment, having a chord (2307) and an arc (2306), the arc having a radius (R) in the range of 25% to 150% of the diameter (D) of the cylindrical space defined by the rotor blades (2301).

8. The vertical wind turbine according to claim 6, wherein a cross-section of the upright members in a horizontal plane is a closed or an open shape composed of a first linear segment, and a first arc segment having a first radius (R1) and a second arc segment having a second radius (R2).

9. The vertical wind turbine according to claim 8, wherein a length of the second arc segment is at least 3.0 times the length of the first arc segment, such that the wind guidance assembly is self-orienting.

10. The vertical wind turbine according to any of the claims 1 to 8, wherein the means for orienting the wind guidance assembly comprises an upright wing located on top of the wind guidance assembly.

11. The vertical wind turbine according to any of the claims 1 to 8, wherein the means for orienting the wind guidance assembly, comprises a sensor for measuring the direction of the wind, and a controller connected to the sensor for reading the measured direction, and a motor connected to said controller for rotating the wind guidance assembly for allowing passage of the wind between the two upright members.

12. The vertical wind turbine according to claim 11, further comprising a second sensor for measuring a speed of the wind, and wherein the controller is adapted for orienting the wind guidance assembly for restricting passage of the wind between the two upright members when the measured speed is above a predefined threshold.

FIG 1 (prior art)

FIG 2

abs(α)   **Angle of attack α [°]**

FIG 3   Azimuth position β [°]

FIG 4

**Angle of attack α [°]**

FIG 5

FIG 6

FIG 7

**FIG 8**

**FIG 9**

**FIG 10**

**FIG 11**

**FIG 12**

## Angle of attack versus azimuth

Darrieus
FIG9
FIG10

# FIG 13

## Angle of attack versus azimuth

Darrieus
FIG11
FIG12

# FIG 14

## Torque (total) versus azimuth

**FIG 15**

## Torque (total) versus azimuth

**FIG 16**

## Torque integral

FIG 17

1802

1805

1801

1803a

1806

1807

1804

1803b

**FIG 19**

**FIG 18**

1800

1803

1807

1801

**FIG 20**

1806

FIG 21

FIG 22

FIG 23

FIG 24

1803

FIG 25

FIG 26

Europäisches
Patentamt

European
Patent Office

Office européen
des brevets

# EUROPEAN SEARCH REPORT

Application Number

EP 14 18 9369

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/034649 A1 (TAYLOR DEREK ALAN [GB]) 11 February 2010 (2010-02-11) * figures 5-7 * * paragraph [0041] - paragraph [0044] * ----- | 1-12 | INV. F03D7/06 F03D3/00 F03D3/04 |
| X | US 2013/294918 A1 (JAQUIER THOMAS [FR] ET AL) 7 November 2013 (2013-11-07) * figures 2A, 2B * * paragraphs [0045], [0049] * ----- | 1-4,6-12 | |
| X | EP 1 413 748 A1 (DIXI HOLDING B V [NL]) 28 April 2004 (2004-04-28) * figures 3, 4 * * paragraph [0022] * ----- | 1-12 | |
| A | US 2011/204632 A1 (SKALA JAMES A [US]) 25 August 2011 (2011-08-25) * figures 1, 3, 5 * * paragraphs [0041], [0042], [0048] * ----- | 1,11,12 | |

TECHNICAL FIELDS
SEARCHED (IPC)

F03D

The present search report has been drawn up for all claims

| Place of search | Date of completion of the search | Examiner |
|---|---|---|
| The Hague | 24 March 2015 | Altmann, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 14 18 9369

This annex lists the patent family members relating to the patent documents cited in  the above-mentioned European search report.
The members are as contained in the European Patent Office EDP file on
The European Patent Office is in no way liable for these particulars which are merely given for the purpose of information.

24-03-2015

| Patent document cited in search report | | | Publication date | Patent family member(s) | | | Publication date |
|---|---|---|---|---|---|---|---|
| US | 2010034649 | A1 | 11-02-2010 | US | 2010034649 | A1 | 11-02-2010 |
| | | | | WO | 2008001080 | A1 | 03-01-2008 |
| US | 2013294918 | A1 | 07-11-2013 | CA | 2816930 | A1 | 10-05-2012 |
| | | | | CL | 2013001222 | A1 | 09-05-2014 |
| | | | | CN | 103703244 | A | 02-04-2014 |
| | | | | EP | 2635801 | A1 | 11-09-2013 |
| | | | | FR | 2967216 | A1 | 11-05-2012 |
| | | | | JP | 2013541675 | A | 14-11-2013 |
| | | | | KR | 20140043699 | A | 10-04-2014 |
| | | | | US | 2013294918 | A1 | 07-11-2013 |
| | | | | WO | 2012059697 | A1 | 10-05-2012 |
| EP | 1413748 | A1 | 28-04-2004 | NONE | | | |
| US | 2011204632 | A1 | 25-08-2011 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1835018 A, Mr. Darrieus
- US 5380149 A